# EUROPEAN PATENT SPECIFICATION

(11) **EP 2 331 321 B1**
(45) Date of publication and mention of the grant of the patent: **16.01.2013**
(21) Application number: 09815653.2
(22) Date of filing: 28.09.2009
(51) Int. Cl.: B29D 7/01, B32B 27/20, C08J 5/18, C08K 3/00, C08L 23/10, C08L 23/08

(54) **POLYOLEFIN COMPOSITION**
POLYOLEFINZUSAMMENSETZUNG
COMPOSITION DE POLYOLÉFINE

(30) Priority: 29.09.2008 EP 08165361
(43) Date of publication of application: 15.06.2011
(73) Proprietor: Borealis AG, 1220 Vienna (AT)
(72) Inventor: GAHLEITNER, Markus, A-4501 Neuhofen/Krems (AT); JOHANSEN, Geir Morten, N-3943 Porsgrunn (NO); ØYSÆD, Harry, N-3960 Stathelle (NO); SKAU, Karl Isak, N-3970 Langesund (NO)
(74) Representative: Kador & Partner
(86) International application number: PCT/EP2009/006965
(87) International publication number: WO 2010/034515

(56) References cited:
- EP-A- 1 437 379
- EP-A- 1 561 782
- EP-A- 1 950 028
- WO-A-03/055792
- US-A1- 2006 122 312
- US-A1- 2007 196 644

## Description

### Field of the invention

The present invention concerns a polyolefin (PO) composition comprising a water resistive and water vapour barrier polymer, an oxygen barrier polymer and an anisotropic mineral filler, whereby the composition is a polypropylene (PP) composition; a process for making monolayers or monolayer articles comprising the PO composition; and articles, especially containers, made from the PO composition.

### Description of the background art

Many food and drink containers are made of thermoplastic polymers, among which poly(ethylene terephtalate) (PET) is widely used due to its stiffness, barrier qualities, clarity and processability.

Known containers made of PP, although being more heat resistant than respective PET containers and having a better water and water vapor resistance in terms of both barrier and hydrolysis, suffer in some of these aspects.

In particular, the oxygen barrier properties of PP are poor.

US 6316114 discloses PP blended with ethylene vinyl alcohol copolymers (EVOH), employed to form biaxially oriented films having oxygen barrier properties ten times better than PP alone. These materials however suffer from a reduced stiffness, making them unsuitable for rigid containers.

WO 2006/080715 describes dry-blended nanocomposite compositions comprising 40-97 ppw (parts per weight) PP and 3-60 ppw intercalated PP nanocomposite, the latter comprising 0,1-42% clay having an organic content of 1-45 wt%. The oxygen barrier properties were only marginally improved.

In J. Appl. Polym. Sci. 93, 1102-1109 (2004) Grunlan et al. describe the effect of clay concentration on the oxygen permeability and optical properties of a modified poly vinyl alcohol (PVOH). Although the modified PVOH exhibited reduced oxygen permeability, the stability of the resulting compositions decreased and the processability was substantially reduced.

Similar compositions are also disclosed in US 5854326.

### Description of the Invention

According to a first aspect, the invention provides a composition comprising a water resistive and water vapour barrier polymer component, an oxygen barrier polymer component, and an anisotropic mineral filler according to claim 1.

The anisotropic mineral filler has a platelet form, preferably with two dimensions being significantly higher than the third dimension. In their biggest dimension, the mineral filler platelets preferably have a maximum size of 20 µm, more preferably of 15 µm.

The mineral filler is selected from the group consisting of talc, mica, montmorillonite, wollastonite, bentonite, silica, halloysite, kaolinite and other phyllosilicates.

Preferably, the filler shall be lamellar, such as clay, mica or talc. More preferably, the filler shall be finely divided. The finely divided filler consists of about 95 wt% of particles having particle sizes of less than 25 µm, preferably less than 15 µm and about 20-30 wt% of particles having a particle size of less than 1 µm. In the present invention all layer materials may be used as long as they have the ability to disperse in the polymer composition. The filler may preferably be either a clay-based compound or a submicron filler such as talc or mica, which usually have been treated, for instance by grinding, to obtain particles of small, i.e. submicron, dimensions, in situ as stated above.

Of course the filler may also contain components comprising a mixture of different fillers, such as mixtures of clay-based filler and talc.

Preferably talc, more preferably finely powdered talc is used as filler. Most preferably talc is used as the sole filler. Still more preferably the talc used has a top-cut particle size of less than 25 µm (95% of particles below that size, according to ISO 787-7) even more preferred of less than15 µm (95%<).

Suitable commercial available finely powdered talcs are Tital 15 with a particle size d97 (top cut) of 21 µm and a specific surface (BET) of 10 m²/g, Tital 10 with particle size d97 (top cut) of 10 µm and a specific surface (BET) of 16 m²/g, both distributed by Ankerpoort NV, The Netherlands, or Luzenac A7 having a particle size d97 (top cut) of 7 µm and a specific surface (BET) of 18 m²/g, distributed by Luzenac SA, France.

The amount of filler used is from 5 to 30 wt% based on the total weight of the PO composition, more preferably 8 to 25 wt%.

The inventors have found that the addition of the mineral filler to the PO composition increases the water resistance and water vapour barrier, and the oxygen barrier, and furthermore exhibits desirable qualities with regard to stiffness.

As water resistive and water vapour barrier polymer component preferably a polyolefin (PO) barrier polymer component is used.

The polyolefins are polypropylene homo- or copolymers or terpolymers suitable for making films and being characterized by a melt flow rate (MFR₂) at 230°C and 2.16 kg load according to ISO 1133 of 1 to 100 g/10min. preferably 1.5 to 50 g/10min, more preferably 2 to 20 g/10min.

Even more preferred are propylene random co- or terpolymers with comonomers selected from ethylene and alpha-olefins with 4 to 12 carbon atoms, preferably with 4 to 8 carbon atoms, preferably with a comonomer content of less than 8 wt%.

Most preferred are polypropylene random co- or terpolymers with ethylene and/or butene as comonomer in an amount of 0.5 to 6 wt%.

The polypropylene polymer of use in this invention may be unimodal or multimodal. In a unimodal polymer its molecular weight profile comprises a single peak. By multimodal, preferably bimodal, is meant that its molecular weight profile does not comprise a single peak but instead comprises the combination of two or more peaks (which may or may not be distinguishable) centred about different average molecular weights as a result of the fact that the polymer comprises two or more separately produced components, e.g. blended components or more preferably components prepared in situ.

Multimodal polymers may be prepared by simple blending, by two or more stage polymerisation or by the use of two or more different polymerisation catalysts in a one stage polymerisation. Preferably however they are produced in a two-stage polymerisation using the same catalyst, e.g. a metallocene catalyst or preferably a Ziegler-Natta catalyst, in particular a slurry polymerisation in a loop reactor followed by a gas phase polymerisation in a gas phase reactor. Conventional cocatalysts, supports/caniers, electron donors etc. can be used.

Preferred processes are the Borstar®PP and Borstar®PE processes of Borealis. Especially preferred random copolymers are those produced in accordance with the disclosure of WO 03/002625 A1.

Unimodal polymers can be made using a one stage process e.g. using the parameters above for slurry and gas phase processes. Catalysts employable are the same as those utilised to manufacture multimodal polymers.

The polyolefin may also be mixed with minor amounts known to an art skilled person of standard polymer additives such as polymer processing agent, nucleating agents, antioxidants, reheat agents, UV stabilisers, clarifying agents etc.

The PO polymer component is present in the PO composition in an amount of 30 to 80 wt%, preferably 40 to 65 wt%, based on the total weight of the PO composition.

As oxygen barrier a polar polymer like polyamide (PA), poly(vinyl alcohol) copolymers (PVOH) or ethylene vinyl alcohol copolymers (EVOH) or blends thereof can be used.

Preferred oxygen barrier polymers are crystalline or amorphous polyamides of aliphatic or aromatic nature like polyamide-6 (PA-6), polyamide-6-6 (PA-66), polyamide-12 (PA-12), poly-m-xylylene adipamide (nylon MXD6) or poly-m-xylylene pimelamide (nylon MXD7), or vinyl alcohol polymers (PVOH) or ethylene vinyl alcohol copolymers (EVOH) or blends thereof.

Even more specifically, the oxygen barrier polymer can be selected from poly-m-xylylene adipamide (MXD-6; commercially available from Mitsubishi Petrochemical, Japan) and from ethylene vinyl alcohol copolymers like EVAL SP929B and EVAL F101A, both EVOHs being commercially available from EVAL Europe, Belgium) or blends thereof.

The oxygen barrier polymer is present in the PO composition in an amount of 15 to 40 wt%, preferably 20 to 35 wt%, based on the total weight of the PO composition.

The PO composition according to the invention can also comprise a compatibiliser to improve the phase structure and to increase the adhesion between the water vapour barrier polymer component, the oxygen barrier polymer component and the anisotropic mineral filler.

The compatibiliser can comprise an acid or anhydride modified polyolefin for example anhydride-modified polypropylene or polyethylene resin; or styrene block copolymers.

Preferred are maleic anhydride grafted polypropylene or polyethylene homo- or copolymers and maleic anhydride grafted and/or hydrogenated styrene block copolymers having a melt flow rate MFR₂ of 1 to 100, preferably 2 to 50 g/10 min.

The anhydride content of the maleic anhydride, grafted polymers is 0.1 to 10, preferably 0.2 to 8 wt%.

Suitable maleic anhydride grafted polypropylene or polyethylene homo- or copolymers and maleic anhydride grafted and/or hydrogenated styrene block copolymers are also commercially available.

Especially preferred examples are:
- maleic anhydride modified polypropylenes like Bynel 50E725 (commercially available from DuPont de Nemours Inc., USA), Scona TPPP 2112 GA (commercial available from Kometra GmbH, Germany) or Polybond 3200 (commercially available from Crompton SA, Belgium)
- maleic anhydride modified polyethylenes like Bynel 41 E687 (commercially available from DuPont de Nemours Inc., USA),
- grafted and ungrafted styrene block copolymers like styrene-butadiene di- and triblock copolymers, either in native or in hydrogenated form. Tri-block copolymers include styrene elastomers, more specifically styrene-ethylene-butene-styrene terpolymers (SEBS), styrene-ethylene-propylene-styrene terpolymers (SEPS) and styrene-isoprene-styrene terpolymers (SIS), which can be additionally modified by grafting with minor amounts of an acid or anhydride component. Preferred examples are the non-grafted, hydrogenated SEBS Tuftec H1221 (commercially available from Asahi Denka, Japan) and the maleic anhydride grafted SEBS Kraton FG 1901X (commercially available from Kraton Inc., UK).

The compatibiliser is blended with the PO composition so that the total weight of the compatibiliser lies in the range of 0 -10 wt%., preferably 0.3 to 8 wt%, more preferably 0.5 to 6, based on the total weight of the PO composition.

The PO composition can be produced by any suitable melt mixing process.

Typical devices for performing said melt mixing process are twin screw extruders, single screw extruders optionally combined with static mixers, chamber kneaders such as Farell kneaders and reciprocating co-kneaders, for example Buss co-kneaders.

Preferably, the melt mixing process is carried out in a twin screw extruder with high intensity mixing segments and preferably at a temperature of 20-50 °C above the melting point of the polymer component present having the highest melting point in the composition, but below the stability limit temperature of the polymer component present having the lowest thermal stability in the composition.

A preferred suitable composition can comprise
(a) 40 to 65 wt%, of vapour barrier polymer component,
(b) 20 to 35 wt%, of oxygen barrier polymer component, preferably EVOH and/or polyamide,
(c) 8 to 20 wt%, of anisotropic mineral filler, preferably talc, clay or mica, and
(d) 0.3 to 8 wt%, preferably 0.5 to 6 wt% of compatibiliser,
the sum of (a), (b), (c) and (d) being 100%.

A most preferred PO composition comprises 30 wt% of EVOH, 20 wt % of talc and 0.5 to 6 wt% of a compatibiliser, in a PP random co-polymer.

The PO composition according to the invention is particularly suitable to cast film extrusion techniques followed by uni- or biaxially stretching techniques and to injection and blow moulding techniques, especially for injection stretch blow moulding (ISBM).

Thus, according to a second aspect, the invention provides the use of the PO composition as defined above, for processing into an injection molded or extruded article and then stretching, preferably biaxially stretching, to form a monolayer, respectively a monolayer article, thus further improving stiffness, oxygen and water vapour barrier. An especially preferably range of stretching ratios is 1.5 to 10.

Preferably the monolayer article produced as described above has a thickness of 500 to 3000 µm before, and 100 to 1000 µm after stretching at a stretching ratio of 1.5 to 10.

The monolayer article, respectively the monolayer, has a tensile modulus of at least 600, for example at least 1000, preferably at least 1200, more preferably at least 2000, and even more preferably at least 2500 MPa.

Furthermore the monolayer article, respectively the monolayer has an oxygen permeability of ≤ 350 cm³O₂/m² 24 h, for example 300 cm³O₂/m² 24 h, or ≤ 250 cm³O₂m² 24 h, preferably ≤ 100 cm³O₂/m² 24 h, more preferably ≤ 80 cm³O₂/m² 24 h, and even more preferably ≤ 30 cm³O_{2/}m² 24 h.

Monolayer articles can be films suitable for packaging or containers, like food containers or beverage bottles.

The inventors have found that the composition according to the present invention can be stretched in a biaxial orientation, in a stretch ratio comparable to known injection stretch-blow moulding (ISBM) applications.

Injection stretch blow moulding (ISBM) is a known process which involves certain steps. First, a pre-form is injection moulded by the injection of the PO composition.

The composition is heated to melt it to form a flowable polymer melt that is introduced by injection into the mould. The injection mould has a cavity and a mating ram to form the pre-form into the desired shape, e.g. one having threaded neck portion and a bottle body portion. The pre-form can then be removed from the mould, cooled and stored until it is ready to be formed into an article or the pre-form can be stretched and blown straight away.

In the reheating operation, when the pre-form reaches the desired temperature, the reheated pre-form is then ready for stretch blow moulding. The pre-form is placed within a suitably shaped mould and a gas, such as air or nitrogen, is injected into the internal volume of the pre-form through a nozzle as a push rod forces the polypropylene composition to expand outwardly to fill the mould. This is the stretching and blowing stage of the process. During this step the material becomes biaxially oriented which improves the physical and optical properties of the article, as well as improving the barrier properties.

The stretching temperatures used are normally between 90 deg. C and 160 deg. C, e.g. 130 deg. C. Stretching speeds may range from 20 to 60 m/min in both TD and MD.

Further aspects of the invention are specified in the claims and include a monolayer article produced of the PO composition according to the invention or a multilayer article consisting of one barrier layer comprising the PO composition according to the invention and one or more polyolefin layers.

Suitable polyolefin layers are state of the art and can be produced of polyolefins selected from high density polyethylene, linear low density polyethylene or polypropylene homo- or copolymers.

If two polyolefin layers are used, the barrier layer comprising the PO composition according to the invention is preferably sandwiched between these two polyolefin layers, which may be the same or may be different.

A multilayer article may further comprise additional layers, like adhesive layers, metal foil layers, e.t.c., common in the packaging state of the art.

The inventors have found that such a monolayer gives roughly 25 times improved oxygen barrier properties compared with pure PP. Moreover monolayer articles offer improved recyclability over multilayer products.

Thus a further aspect of the invention includes articles, preferably containers, produced of a stretched monolayer comprising the PO composition according to the invention.

### Examples

The invention is illustrated by way of the following examples which were prepared and characterized as outlined below.

The following components were used to prepare the examples:
- EVAL SP929B is an ethylene vinyl alcohol copolymer having an ethylene content of 44 mol%, a melt flow rate (230°C /2.16 kg) of 8.2 g/10min and a density of 1130 kg/m³. The barrier polymer is commercially available from EVAL Europe NV, Belgium.
- RD208CF is a propylene-ethylene random copolymer having an ethylene content of 4.5 wt%, a melt flow rate (230°C / 2.16 kg) of 8 g/10min and a density of 905 kg/m³. The polyolefin is commercially available from Borealis Polyolefine GmbH, Austria.
- Scona TPPP 2112 GA is a maleic anhydride grafted polypropylene homopolymer. The compatibiliser is commercially available from Kometra GmbH, Germany.
- Tital 10 is a talc filler with a particle size d97 (top cut) of 10 µm and a specific surface (BET) of 16 m²/g commercially available from Ankerpoort NV, The Netherlands,

All polymer compositions were prepared on a PRISM TSE24 co-rotating twin screw extruder with a screw diameter of 24 mm and a length to diameter ratio of 40 with two high intensity mixing segments at a mixing temperature of 190-230°C and a throughput of 10 kg/h and a screw speed of 50 rpm. The material was extruded to two circular dies of 3 mm diameter into a water bath for strand solidification and then pelletized and dried.

injection moulded plates having a dimension of 60 x 60 x 2 mm³ were prepared in accordance with EN ISO 1873-2.

Biaxially oriented samples were formed from injection moulded plaques prepared by the technique above. The biaxial orientation process involved biaxial drawing in a laboratory film stretcher KARO IV (Brückner Maschinenbau GmbH, Siegsdorf, Germany) at VTT, Tampere, Finland. The plaques were heated in a heating chamber by IR radiation, for a defined period of time 120s before drawing. To simulate as much as possible the ISBM process, the maximum stretch speed of 35m/min was used. The stretch ratio of 3.5 x 3.5 was selected in order to achieve a 10 times thickness reduction, e.g. from 2 mm to 0.2mm (same as in ISBM process). During the simultaneous drawing, force elongation curves were recorded in the machine direction and in the transverse direction.

Table 1 below summarizes the PO compositions and properties for the inventive (EX 1 and EX 2) and comparative (CE1, CE2, CE3) compositions tested. A reduction of oxygen permeability to below 100 cm³/m²day at an increase of the tensile modulus to above 2000 MPa was achieved for the inventive compositions.

**Table 1 - PO compositions, oxygen permeability and stiffness of examples and comparative examples**

| **EX/CE** | **PP wt.%** | **EVOH wt%** | **Talc wt.%** | **Compatibiliser wt.%** | **O₂ permeability cm³/m²day** | **Tensile Modulus MPa** |
|---|---|---|---|---|---|---|
| CE 1 | 100 | 0 | 0 | 0 | 556 | 660 |
| CE 2 | 75 | 10 | 10 | 5 | 247 | 1295 |
| CE 3 | 69.25 | 10 | 20 | 0.75 | 314 | 1705 |
| EX 1 | 49.25 | 30 | 20 | 0.75 | 70.7 | 2125 |
| EX 2 | 45 | 30 | 20 | 5 | 22.2 | 2755 |

In detail, the components and compositions were characterized as follows:
- The melt flow rate (MFR) is an indication of the melt viscosity of the polymer. The MFR is determined at 190°C for PE and at 230 °C for PP. The load under which the melt flow rate is determined is usually indicated as a subscript, for instance MFR₂ is measured under 2.16 kg load, MFR₅ is measured under 5 kg load or MFR₂₁ is measured under 21.6 kg. The melt flow rate (MFR) was determined according to ISO 1133 and is indicated in g/10 min.
- The oxygen permeability was determined on 200 µm films prepared by biaxial stretching from injection molded plates having a dimension of 60 x 60 x 2 mm³ prepared in accordance with EN ISO 1873-2. The stretching was performed on a laboratory film stretcher KARO IV (Brückner Maschinenbau GmbH, Germany); the plaques were heated in a heating chamber by IR radiation, for a defined period of time before drawing. To simulate as much as possible the ISBM process, the maximum stretch speed of 35m/min was used. The stretch ratio of 3,5 x 3,5 was selected in order to achieve a thickness reduction from 2 mm to 0.2mm. The oxygen permeability of the film was measured at +23°C and a relative humidity of 65% using the procedure and instrument described in ASTM D3985. The model OX-TRAN 100A of (Mocon corporation, USA) was used and the diffusion cell area was 100 cm².
- The tensile modulus was determined according to ISO 527-2 with a test speed of 5 mm/min at 23 °C using specimen type 5B machined from the injection molded plates as described above.

## Claims

1. A polyolefin composition comprising:
- 30 to 80 wt%, based on the total amount of the polyolefin composition, of a water resistive and water vapour barrier polymer component which comprises a polypropylene homo- or co- or terpolymer suitable for making biaxially oriented films and having a melt flow rate (MFR; 230°C/2,16kg; ISO 1133) of 1 to 100 g/10 min,
- 15 to 40 wt%, based on the total amount of the polyolefin composition, of an oxygen barrier polymer component,
- 5 to 30 wt%, based on the total amount of the poyolefin composition, of an anisotropic mineral filler having a platelet form with 95 wt% of the particles having particle sizes of less than 25 µm, and is selected from the group consisting of talc, mica, montmorillonite, wollastonite, bentonite, silica, halloysite, kaolinite and other phyllosilicates, and
- 0 to 10 wt%, based on the total amount of the polyolefin composition of a compatibiliser.

2. Composition according to claim 1, wherein the water resistive and water vapour barrier polymer component comprises a polypropylene homo- or co- or terpolymer having a melt flow rate (MFR: 230°C/2.16kg; ISO 1133) of 1.5 to 50 g/10 min.

3. Composition according to claim 2, wherein the polypropylene is a homopolymer or random co- or terpolymer with comonomers selected from ethylene and alpha-olefins with 4 to 12 carbon atoms, with a comonomer content of less than 8 wt%.

4. Composition according to any of the preceding claims wherein the oxygen barrier polymer component comprises polyethylene vinyl alcohol and/or a polyamide.

5. Composition according to any of the preceding claims wherein the mineral filler is talc. anhydride modified polyolefin or styrene block copolymer.

6. Composition according to any of the preceding claims wherein the compatibiliser comprises an acid or anhydride modified polyolefin or styrene block copolymer.

7. Composition according to claim 6 wherein the compatibiliser comprises maleic anhydride grafted polypropylene or polyethylene homo- or copolymers and/or maleic anhydride grafted and/or hydrogenated styrene block copolymers having a melt flow rate MFR₂ (ISO 1133) of 1 to 100 g/10min and wherein the anhydride content of the maleic anhydride grafted polymers is 0.1 to 10 wt%.

8. Composition according to any of the preceding claims comprising
(a) 40 to 65 wt% of vapour barrier polymer component,
(b) 20 to 35 wt% of oxygen barrier polymer component, preferably EVOH and/or polyamide,
(c) 8 to 20 wt% of anisotropic mineral filler, preferably talc. clay or mica, and
(d) 0.3 to 8 wt% of compatibiliser.

9. Composition according to claim 8 comprising 30 wt% of polyethylene vinyl alcohol. 20 wt % of talc and 0.5 to 6 wt % of compatibiliser, in a polypropylene random co-polymer.

10. Use of a composition according to any of the preceding claims for cast film extrusion techniques followed by uni- or biaxially stretching techniques and to injection and blow moulding techniques, especially for injection stretch blow moulding to form a monolayer or monolayer article.

11. A monolayer or monolayer article produced of a polyolefin composition according to any of claims 1 to 9 by cast film extrusion techniques followed by biaxially stretching or by injection stretch blow moulding having a tensile modulus of at least 2000 MPa and an oxygen permeability of ≤ 100 cm³O₂/m² 24 h.

12. A container or article comprising a monolayer according to claim 11 forming a monolayer container or article optionally in combination with one or more polyolefin layers, forming a multilayered container or article.

13. A container according to claim 12 being a food container or a beverage bottle.

## Patentansprüche

1. Polyolefinzusammensetzung, die folgendes aufweist:
- 30 bis 80 Gew.-%, und zwar auf die Gesamtmenge der Polyolefinzusammensetzung bezogen, einer wasserbeständigen und als Wasserdampfsperre dienenden Polymerkomponente, die ein Polypropylenhomo- oder -co- oder -terpolymer aufweist, das für die Herstellung biaxial orientierter Folien geeignet ist und eine Schmelzfließrate von 1 bis 100 g/10 min (MFR; 230°C/2,16 kg; ISO 1133) aufweist;
- 15 bis 40 Gew.-%, und zwar auf die Gesamtmenge der Polyolefinzusammensetzung bezogen, einer als Sauerstoffsperre dienenden Polymerkomponente,
- 5 bis 30 Gew.-%, und zwar auf die Gesamtmenge der Polyolefinzusammensetzung bezogen, eines anisotropen mineralischen Füllstoffs, der eine Plättchenform aufweist, wobei 95 Gew.-% der Partikel eine Partikelgröße von weniger als 25 µm aufweisen, und der aus der Gruppe ausgewählt ist, die aus Talkum, Glimmer, Montmorillonit, Wollastonit, Bentonit, Siliciumdioxid, Halloysit, Kaolinit und anderen Phyllosilicaten besteht, und
- 0 bis 10 Gew.-%, und zwar auf die Gesamtmenge der Polyolefinzusammensetzung bezogen, eines Kompatibilitätsmittels.

2. Zusammensetzung nach Anspruch 1, wobei die wasserbeständige und als Wasserdampfsperre dienende Polymerkomponente ein Polypropylenhomo- oder -co- oder -terpolymer mit einer Schmelzfließrate von 1,5 bis 50 g/10 min (MFR; 230°C/2,16 kg; ISO 1133) umfaßt.

3. Zusammensetzung nach Anspruch 2, wobei das Polypropylen ein Homopolymer oder statistisches Co- oder Terpolymer mit Comonomeren, die aus Ethylen und α-Olefinen mit 4 bis 12 Kohlenstoffatomen ausgewählt sind, mit einem Comonomergehalt von weniger als 8 Gew.-% ist.

4. Zusammensetzung nach einem der vorstehenden Ansprüche, wobei die als Sauerstoffsperre dienende Polymerkomponente Polyethylen-Vinylalkohol und/oder ein Polyamid aufweist.

5. Zusammensetzung nach einem der vorstehenden Ansprüche, wobei der mineralische Füllstoff Talkum ist.

6. Zusammensetzung nach einem der vorstehenden Ansprüche, wobei das Kompatibilitätsmittel ein mit Säure oder Anhydrid modifiziertes Polyolefin- oder Styrol-Blockcopolymer umfaßt.

7. Zusammensetzung nach Anspruch 6, wobei das Kompatibilitätsmittel mit Maleinsäureanhydrid gepfropfte Polypropylen- oder Polyethylenhomo- oder -copolymere und/oder mit Maleinsäureanhydrid gepfropfte und/oder hydrierte Styrol-Blockcopolymere mit einer Schmelzfließrate MFR₂ (ISO 1133) von 1 bis 100 g/10 min umfaßt und wobei der Anhydridgehalt der mit Maleinsäureanhydrid gepfropften Polymere 0,1 bis 10 Gew.-% beträgt.

8. Zusammensetzung nach einem der vorstehenden Ansprüche, die folgendes aufweist:
(a) 40 bis 65 Gew.-% einer als Dampfsperre dienenden Polymerkomponente;
(b) 20 bis 35 Gew.-% einer als Sauerstoffsperre dienenden Polymerkomponente, vorzugsweise EVOH und/oder Polyamid;
(c) 8 bis 20 Gew.-% eines anisotropen mineralischen Füllstoffs, vorzugsweise Talkum, Ton oder Glimmer;
(d) 0,3 bis 8 Gew.-% eines Kompatibilitätsmittels.

9. Zusammensetzung nach Anspruch 8, die 30 Gew.-% Polyethylen-Vinylalkohol, 20 Gew.-% Talkum und 0,5 bis 6 Gew.-% Kompatibilitätsmittel in einem statistischen Polypropylencopolymer umfaßt.

10. Verwendung einer Zusammensetzung nach einem der vorstehenden Ansprüche für Gießfolienextrusionsverfahren, gefolgt von mono- oder biaxialen Reckverfahren und für Spritzgieß- und Blasformverfahren, insbesondere für das Spritzstreckblasen, um eine Monoschicht oder einen Monoschichtgegenstand zu erzeugen.

11. Monoschicht oder Monoschichtgegenstand, die bzw. der aus einer Polyolefinzusammensetzung nach einem der Ansprüche 1 bis 9 durch Gießfolienextrusionsverfahren, gefolgt vom biaxialen Recken oder durch das Spritzstreckblasen hergestellt ist, mit einem Zugmodul von mindestens 2000 MPa und einer Sauerstoffdurchlässigkeit von ≤ 100 cm³O₂/m² 24 h.

12. Behälter oder Gegenstand, umfassend eine Monoschicht nach Anspruch 11, womit ein Monoschichtbehälter oder -gegenstand gebildet wird, gegebenenfalls in Kombination mit einer oder mehreren Polyolefinschichten, womit ein mehrschichtiger Behälter oder Gegenstand gebildet wird.

13. Behälter nach Anspruch 12, der ein Lebensmittelbehälter oder eine Getränkeflasche ist.

## Revendications

1. Composition de polyoléfine comprenant :
- 30 à 80 % en poids, sur la base de la quantité totale de la composition de polyoléfine, d'un composant polymère pare-vapeur d'eau et résistant à l'eau qui comprend un homo- ou un co- ou un terpolymère de polypropylène approprié pour la préparation de films orientés biaxialement et ayant un indice de fluidité (MFR; 230 °C/2,16 kg ; ISO 1133) de 1 à 100 g/10 minutes,
- 15 à 40 % en poids, sur la base de la quantité totale de la composition de polyoléfine, d'un composant polymère barrière contre l'oxygène,
- 5 à 30 % en poids, sur la base de la quantité totale de la composition de polyoléfine, d'une charge minérale anisotrope ayant une forme de plaquette avec 95 % en poids de particules ayant des tailles de particule inférieures à 25 µm, et qui est choisie dans le groupe constitué par le talc, le mica, la montmorillonite, la wollastonite, la bentonite, la silice, l'halloysite, la kaolinite et d'autres phyllosilicates, et
- 0 à 10 % en poids, sur la base de la quantité totale de la composition de polyoléfine, d'un compatibiliseur.

2. Composition selon la revendication 1, dans laquelle le composant polymère pare-vapeur d'eau et résistant à l'eau comprend un homo- ou un co- ou un terpolymère de polypropylène ayant un indice de fluidité (MFR ; 230 °C/2,16 kg ; ISO 1133) de 1,5 à 50 g/10 minutes.

3. Composition selon la revendication 2, dans laquelle le polypropylène est un homopolymère ou un co- ou un terpolymère aléatoire avec des comonomères choisis parmi l'éthylène et les alpha-oléfines possédant 4 à 12 atomes de carbone, avec une teneur en comonomère inférieure à 8 % en poids.

4. Composition selon l'une quelconque des revendications précédentes, dans laquelle le composant polymère barrière contre l'oxygène comprend un polyéthylène-alcool vinylique et/ou un polyamide.

5. Composition selon l'une quelconque des revendications précédentes, dans laquelle la charge minérale est le talc.

6. Composition selon l'une quelconque des revendications précédentes, dans laquelle le compatibiliseur comprend un copolymère séquencé de polyoléfine ou de styrène modifié par un acide ou un anhydride.

7. Composition selon la revendication 6, dans laquelle le compatibiliseur comprend des homo- ou copolymères de polypropylène ou de polyéthylène greffés à l'anhydride maléique et/ou des copolymères séquencés de styrène hydrogénés et/ou greffés à l'anhydride maléique ayant un indice de fluidité MFR₂ (ISO 1133) de 1 à 100 g/10 minutes et dans lequel la teneur en anhydride des polymères greffés à l'anhydride maléique est de 0,1 à 10 % en poids.

8. Composition selon l'une quelconque des revendications précédentes, comprenant :
(a) 40 à 65 % en poids du composant polymère pare-vapeur,
(b) 20 à 35 % en poids du composant polymère barrière contre l'oxygène, de préférence un EVOH et/ou un polyamide,
(c) 8 à 20 % en poids d'une charge minérale anisotrope, de préférence le talc, l'argile ou le mica, et
(d) 0,3 à 8 % en poids de compatibiliseur.

9. Composition selon la revendication 8, comprenant 30 % en poids de polyéthylène-alcool vinylique, 20 % en poids de talc et 0,5 à 6 % en poids de compatibiliseur, dans un copolymère aléatoire de polypropylène.

10. Utilisation d'une composition selon l'une quelconque des revendications précédentes, pour des techniques d'extrusion de film coulé suivies par des techniques d'étirage uni- ou biaxial et des techniques de moulage par injection et soufflage, en particulier pour le moulage par injection-soufflage avec étirage pour former une monocouche ou un article monocouche.

11. Monocouche ou article monocouche produit(e) à partir d'une composition de polyoléfine selon l'une quelconque des revendications 1 à 9, par des techniques d'extrusion de film coulé suivies par un étirage biaxial ou par un moulage par injection-soufflage avec étirage ayant un module de traction d'au moins 2000 MPa et une perméabilité à l'oxygène ≤ 100 cm³ O₂/m² 24 h.

12. Contenant ou article comprenant une monocouche selon la revendication 11, formant un contenant ou un article monocouche facultativement en combinaison avec une ou plusieurs couches de polyoléfine, formant un contenant ou un article multicouche.

13. Contenant selon la revendication 12, qui est un contenant alimentaire ou une bouteille de boisson.
